# EUROPEAN PATENT APPLICATION

(11) **EP 0 538 794 A1**
(43) Date of publication of application: **28.04.1993**
(21) Application number: 92117927.1
(22) Date of filing: 20.10.1992
(51) Int. Cl.: G06F 3/16, G06K 11/18

(54) **Computer mouse and microphone combination and method for using the same**

(30) Priority: 21.10.1991 US 779926
(71) Applicant: MICROSOFT CORPORATION, Redmond, Washington 98052-6399 (US)
(72) Inventor: Garcia, Anthony, Redmond, Washington 98052 (US)
(74) Representative: Grünecker, Kinkeldey, Stockmair & Schwanhäusser Anwaltssozietät

(57) **Abstract**

An apparatus and method for entering audio data into a computer by using a microphone mounted within a mouse. The mouse housing includes a rotatable ball, encoding circuitry, mouse switched and a microphone circuit coupled to the microphone. A user enters commands into the computer by positioning the cursor at a selected location on the screen and depressing a mouse switch. To record a message, the user selects the portion of the application program to which the audio commentary will be attached using a first mouse switch. The user then selects the audio record mode using the same mouse switch. By depressing the same switch again, the user enables the recording of an audio signal. The audio message is stored in the computer by the user speaking into the microphone within the mouse, while maintaining one of the mouse switches in the depressed position. The user can replace a existing audio message by picking up the mouse and pressing same mouse button while recording a new message. The user may also append audio messages onto a existing message by picking up the mouse and speaking into the microphone while depressing a second mouse switch. Thus, the user is provided a simple method for recording an audio message with a mouse, a tool which is readily available, convenient, and easy to use.

## Description

The present invention relates generally to a computer mouse, and more particularly, to a mouse that includes a cursor movement control device, a microphone, and control switches within a single housing to permit audio input into a computer via a mouse.

### Background of the Invention

People presently use a variety of technical tools for data storage and communications. Computers, telephones, facsimile machines, and dictating machines are used to store data and communicate messages. For convenience, a user may have one or more of these tools on her desk, each occupying desk space. One problem is that these tools take up work space, ad a desk may become overcrowded with tools.

Some computers available today permit a user to store an audio message in the computer or incorporate audio messages into a program. Storing audio data in a computer from a user's voice requires a microphone. Presently, a microphone is coupled to the computer ad placed on the desk to permit audio input by the user. The microphone adds another device to an already crowded workspace.

To save space, some manufacturers have built a microphone into the video monitor. The disadvantage of this approach is that the background noise is significant and, therefore, the quality of the audio signal is low. To overcome the background noise problem, the user must lean forward to speak into the microphone. This is an awkward maneuver. Some computer systems permit headsets to be connected to the computer by a wire cable. The headset reduces the background noise problem by placing the microphone closer to the mouth; however, the headset is cumbersome to use and the wire cable creates problems. Headsets are expensive, do not work well in an office environment, and have a low acceptance by users (they are not user friendly).

### Summary of the Invention

According to principles of the present invention, a microphone is provided within a mouse that is attachable to a computer. In one embodiment, the inventive mouse contains a cursor movement control device, such as a rotatable ball, electric circuits for sensing rotation of the ball, electrical switches for inputting commands into a computer, a microphone, and a microphone circuit. The inventive mouse inputs commands into the computer, as is well-known in the art. Having a microphone within the mouse permits the mouse to be a audio data input device as well. The computer commands and audio data are transmitted together to the computer from the mouse. In one embodiment, the mouse signals are transmitted via a cable coupled to a standard serial port and the computer includes a circuit that separates the audio signals from the other signals.

In one embodiment, a user first enables the computer to store audio data by loading an audio software program. The audio program can be loaded using the point and click commands of the mouse by depressing the primary mouse button with the cursor on the audio program icon, just as many computer programs can be loaded, as is well-known today. The user records audio data into the computer by depressing the primary mouse button again and speaking into the microphone while holding down this button. Releasing the button terminates the recording.

The computer, with the mouse and software, mimic a standard tape recorder in may respects. The user can depress selected mouse buttons while the cursor is pointing to an icon to record, playback, rewind, fast forward, stop, and the like. The present invention also permits her to instantly rewind to the start of the data, fast forward instantly to the end, instantly erase a message, replace a message with a current message, or append a message to a prior message, features not available on a standard tape recorder.

The microphone mouse combination is inexpensive and easy to use. Its operation is somewhat similar to the well-known dictating machines for which the user picks up the microphone and depresses switches to control the record and playback functions. This approach is an improvement over other audio input designs for computers because it eliminates background noise inherent in systems where the microphone is located at some distance from the user, and is less cumbersome than systems that use a microphone headset connected to a computer.

Other features and advantages of the invention will become apparent from the following detailed description, taken in conjunction with the accompanying drawings.

### Brief Description of the Drawings

Figure 1 is a block diagram of a computer system with a microphone mounted within a mouse.

Figure 2 is a schematic diagram of a microphone circuit.

Figure 2A is a rear view of a typical computer depicting various alternative connectors.

Figure 3A is a partial cutaway top view of a mouse having a microphone therein.

Figure 3B is a side view of the mouse of Figure 3A.

Figure 4 is a depiction of the screen icons used with one embodiment of the present invention.

### Detailed Description of the Invention

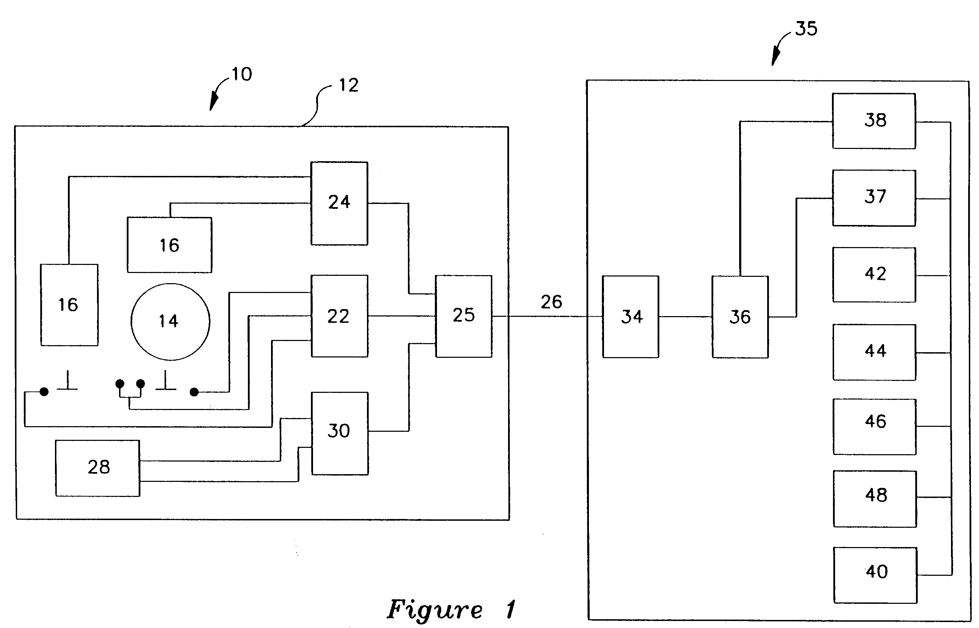

As shown in Figure 1, a mouse 10 is coupled to a computer 35 via a transmission line 26. The term "mouse" is used broadly and includes any computer pointing and command entry device, such as a desktop mouse, a trackball device, Microsoft's Ballpoint® mouse, a joystick, or the like.

The mouse 10 includes a housing 12, and within the housing a cursor movement control device having a rotatable ball 14, an encoder 16, switches 18 and 20, and a microphone 28. The term "cursor control device" includes a rotatable ball and encoder, but may also include a joystick or optical controllers a well. An electric circuit 24 is coupled to the encoder 16; an electric circuit 22 is coupled to the switches 18 and 20; and an electric circuit 30 is coupled to the microphone 28. A battery power supply 32, such as 3 volts, is optionally coupled to the electrical circuit to provide a power supply for the microphone and audio data signal. The respective circuits 22, 24, and 30 are coupled to a transmission circuit 25, within the mouse 10. Data and signals to and from each of the circuits 22, 24, and 30 are transmitted from and to the computer 35 on the transmission line 26 through transmission circuit 25. The transmission line 26 is any acceptable transmission line, including an electrical wire cable, or an optical beam, or a radio frequency (RF) channel. The appropriate transmission circuit 25 is selected to provide transmission on the line 26; thus the transmission circuit 25 may be a simple wire connector, an optic coupler, or a RF transmitter.

Power is supplied to the mouse 10 in any suitable way. In one embodiment, the mouse 10 receives power from the computer 35 via some of the wires in the transmission line cable 26, the power line being in the same cable with the data lines. Alternatively, power is provided by battery 32 within the housing 12, as would be useful for an optical or RF transmission line 26. Using a battery 32 in the housing 12 for power has the advantage of providing a clean power supply and few or no noise filter elements are required. If power is provided by the serial port, the appropriate filters are placed in the mouse 10 to provide a clean audio signal output. Filters to remove noise from a power supply line to make it suitable for audio data are generally known in the art and any suitable filter is acceptable.

As mentioned above, microphone 28 is mounted within the housing 12. The microphone 28 transduces the audio data into an electrical audio data signal. The term microphone includes devices capable of transducing audio signals into electrical signals such as electret, condenser, or moving-coil microphones, accelerometers, pressure transducers, or piezoelectric transducers. Audio circuitry 30 within the housing 12 receives the output from the microphone 28. In the presently preferred embodiment, an electret microphone is used for microphone 28 due to its high quality, low cost, ruggedness, small size, and the simplicity of associated circuitry 30.

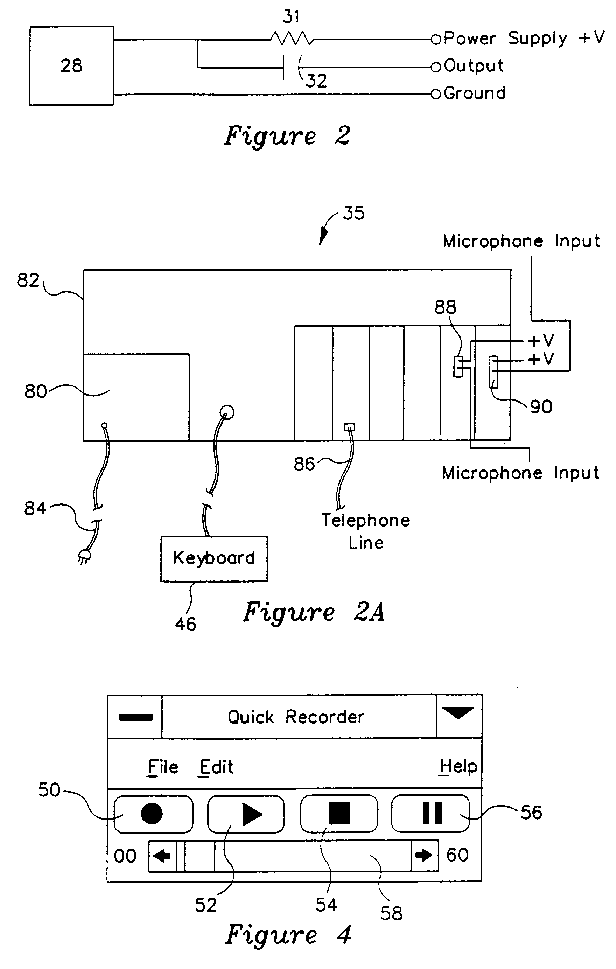

As shown in Figure 2, the circuit 30 for an electret microphone includes a current-limiting resistor 31 in series with the power supply line 38 and a capacitor 32 in series with the output line 33. The circuit 30 can be any suitable circuit for connecting to the microphone 28 to provide the desired electrical output on line 33. For example, the circuit 30 may be a digital encoding circuit, a simple wire (for a moving coil microphone), an optical encoder circuit, a wheatstone bridge, or the like. The output 33 of the audio circuit 30 is input to the transmission circuit 25.

As shown in Figure 1, output of the mouse 10 is connected to a receiving circuit 34 within the computer 35. In one embodiment, the receiving circuit 34 is a connector directly coupled to the wire transmission line 26 and receives the signals from the mouse 10. A signal separator circuit 36 separates the electrical audio data signal from the other signal output by the mouse 10. In the signal separator 36, the electrical signals corresponding with the rotational movement of the rotatable ball and the electrical signals associated with the switches are routed to a mouse signal circuit 37, and the electrical audio data signal from the microphone 28 is routed to a computer sound board 38. Computer sound boards are well-known in the industry and are commercially available for most computers. The computer sound board 38 can be a stand-alone board solely devoted to audio circuits, or alternatively, it can be audio circuitry mounted on a board having chips with other functions thereon, such as video chips, etc. In one embodiment, the sound board 38 includes a clean, stable power supply for a microphone. Such computer sound boards or audio circuits 38 usually include analog to digital converters and circuitry to interface with the CPU 40 to permit manipulation, storage, and read-out of audio signals.

In one embodiment of the invention, the mouse 10 is plugged via wire cable 26, directly into a standard serial port, the serial port being part of the receiving circuit 34. Heretofore unused wires in the serial cable and connectors of the serial port are used to carry the electrical audio signal. That is, a serial port may have nine pins ad a serial cable nine wires; today, only six or seven of those pins are used for power and mouse functions, and two pins are unused. These pins can be used to carry the audio data signal. Alternatively, the audio data can be superimposed on top of the cursor movement control data and carried on the same wires. The audio wires are routed to the sound board 38. The serial port may be positioned on the sound board 38, the serial port providing the functions of receiving circuit 34, signal separator 36, and connection to the sound board 38. The combined board saves space in the computer by requiring only a single board rather than two separate boards. In yet other embodiments, the receiver 34 is an optocoupler or an RF receiver.

A typical computer system 35 includes a central processing unit 40; a volatile memory 42; a non-volatile memory 44, such as disk storage unit; a keyboard 46; a display unit 48; and a mouse signal circuit 37. The mouse 10 may be coupled to any typical computer and, with the appropriate software, store the electrical audio data in either memory 42 or non-volatile memory 44, such as a hard disk.

Figure 2A shows the back of the computer 35 with various alternative connectors that may be used with the present invention. The computer 35 has a power supply 80, contained within the case 82, and is powered by 120 VAC through a standard power cord 84, or alternatively by a battery if computer 35 is portable. The computer 35 also has a keyboard 46, and typically has several additional slots that are used for various electrical circuit boards as selected by a user, such as a modem 49, an extra memory board, an enhanced video board, a line printer board, or the like. Many of these boards will have their own connector to allow I/O directly to the board, or through the board to other circuits in the computer 35. For example, modem board 49 includes a connector 86, serial port board 34 includes a connector 88, and sound board 38 includes a connector 90. The mouse of the present invention may be coupled to the computer through a serial port 34, and derive power solely through the serial port connector 88 as described above. Alternatively, the mouse 10 may be coupled to the connector 90 of the sound board 38. The sound board 38 includes a circuit that provides a clean source of power for the mouse 10 and the microphone within the mouse. Having a separate power supply for the microphone ensures that a clean and properly controlled source of power is always available for a external microphone. As described above, the power supply from the serial port connector 88 can be used, but the power supply of the serial port is subject to significant noise that may cause noise on the audio signal. The noise may be filtered out by a filter circuit within the mouse 10, if desired, but the need for a filter in the mouse 10 can be avoided by providing a circuit for a clean, stable power supply for a microphone on the sound board 38. Any circuit which provides a clean power supply is acceptable; many are known in the art. The sound board 38 separates the microphone signals for processing by the audio interface circuit of the sound board, while the signals associated with the mouse are processed by a mouse interface circuit on the sound board or routed to the appropriate circuit within the computer 35.

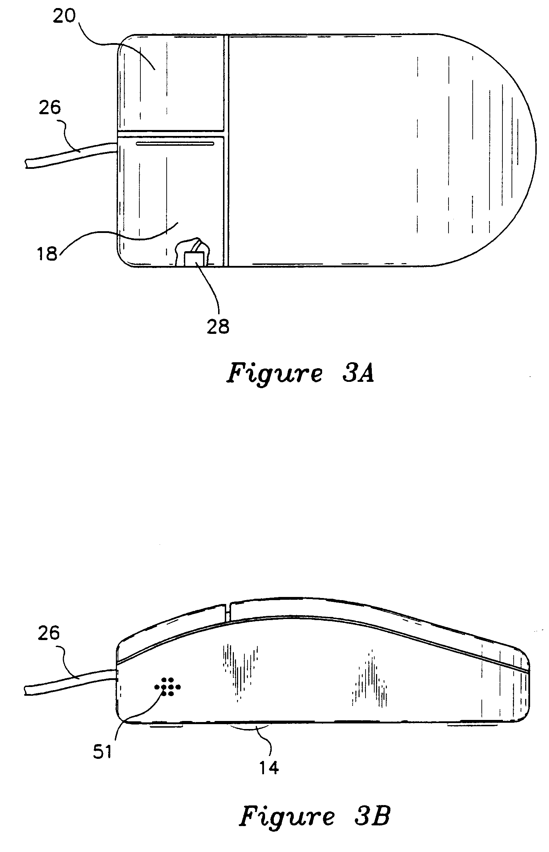

Figures 3A and 3B illustrate a computer mouse 10 having the microphone 28 mounted therein The microphone 28 is mounted in the side of the mouse 10, near the switches 18, 20. The mouse 10 is shown in cutaway to provide a topside view of the microphone 28 within the mouse 10, though the microphone will not usually be visible to a user. As shown in Figure 3B, holes 51 are provided to pass the sound into the mouse housing 12 to impinge on microphone 28. The location of the microphone 28 is selected to place it near the user's mouth when the mouse 10 is held in the hand while depressing switches 18 or 20 with the fingers. The position of the microphone 28 in the housing 12 varies for different physical configurations of computer command apparatus. For example, the microphone 28 is mounted in the bottom or on the top of the housing 12 in one embodiment.

The invention is used as follows. The audio software program is loaded by depressing switch 18 while the cursor is on an audio program icon. The computer loads the audio software program and displays a window on the screen, which provides options to enter commands into the computer. A portion of the computer memory, either RAM 42 or nonvolatile memory 44, is automatically designated as the current tape for the audio data storage. As can be appreciated, the term "tape" does not necessarily refer only to an ordinary magnetic tape, but may refer to a block of computer memory that has been designated as a tape. Generally, the blocks are allocated by sire to hold 60 seconds of audio recording, but the tape may be any sire the user desires to allocate, ten minutes for example, up to the computer's storage capacity. Of course, the audio data can be stored on any suitable medium in either analog or digital format, or even on a standard audio tape coupled to the computer 35. Alternatively, the audio data is output directly on a telephone line as voice data through a modem 49 in the computer 35, as explained later herein.

Figure 4 illustrates a sample menu for an audio software program. Icons for record 50, play 52, stop 54, and pause 56 are displayed. Alternatively, icons for fast forward, rewind, return to start, load new tape, and go to the end of tape are also displayed. A time meter 58 in the form of a scroll bar shows graphically how many seconds (or minutes) have been recorded and how much time is left on the tape.

The scroll bar tracks the recording and playback time on the loaded tape. As the user records or plays back from a tape, the scroll bar moves to the right, indicating how much time is left before the maximum time limit is reached. The time limit indicator shows the maximum storage space available in minutes or seconds in that particular data file. Presently, most data files have a maximum storage capability of sixty seconds. Because audio data, when digitized, takes up a great deal of memory, the standard audio tape is sixty seconds in length. If a large, hard disk drive is provided, up to sixty minutes of recording could be provided. Of course, as storage techniques for audio data improve, a standard computer floppy disk will likely be able to hold several audio files and a single floppy-disk may take the place of a dictaphone-recorded magnetic tape.

To record audio data, the user moves the mouse so that the screen cursor points at the audio record icon 50 as shown in Figure 4. The user then depresses (clicks) the primary switch 18 to enable the recording of the audio input. Audio input is preferably recorded while the user is holding the mouse 10 ad speaking into the microphone 28, while depressing the primary mouse switch 18. The audio data is recorded and the electrical audio data signal from the microphone 28 is continuously stored in the computer so long as the user maintains the switch 18 in the depressed position. Releasing the switch 18 on the mouse automatically terminates the input of electrical audio data signal from the microphone. Alternatively, the audio data is recorded after the switch 18 has been released and continues until the stop icon 54 is clicked on. If the user wishes to append audio data to the stored data, she depresses the secondary mouse switch 20 with the cursor pointing to the record icon 50. The present invention includes a automatic rewind feature. If the user depresses the primary mouse switch 18 a second time with the same tape as the storage tape, the prior message is erased and the new audio data is recorded in place of the first message.

Playback of the audio data is accomplished by again using the mouse 10a a pointing and command entry device. The user loads the desired audio file, selects the playback command option by moving the mouse so that the cursor points to the playback icon 52 and clicks the primary mouse switch 18. The computer automatically plays out the message through the sound board 38 to a speaker within the computer 35 or a stand-alone speaker. The clicking on the stop icon 54 stops the playback or recording of audio data. If the data file has been imbedded in an application program, the data field to which the audio commentary is attached will be highlighted during the playback on the display 48 to indicate to the user than an audio commentary is attached to that particular data field.

In summary, clicking switch 18 on the record icon 50 always records audio data at the beginning of the current tape. Clicking switch 20 on the record icon appends the audio data to the end of the audio data already stored on the loaded tape. Because the audio data is stored in a computer memory, random access is effectively permitted. The user can instantly access the beginning, end, or middle portions of any tape. This is an improvement over current audio magnetic tapes which must be accessed serially and a user must wait for the tape rewind to start at the beginning or fast forward to the end, which may take several minutes.

Advantageously, the very same switches on mouse 10 that enter commands into the computer to store, playback, and manipulate software data files are also used to manipulate audio data. The user points and clicks switch 18, that is, places the cursor on an icon and depresses switch 18, to load any program, pull down a menu, select an item from a menu, etc. She points and clicks with switch 18 to load the audio program in this way. She uses the very same switches, 18 and 20, to record and playback audio data that are used to enter commands into the computer. The very same hardware, a mouse 10 and a computer 35 having a hard drive 44 are also used for both functions. The functions which previously required two machines can now be performed by one machine that is operated in a user-friendly, well-known way.

As is well-known, a computer with a modem can automatically dial, ring, and connect to a standard telephone line. With this invention, the user can mimic, and thus replace, the existing telephone hardware as well. The invention is used as a standard telephone by dialing the desired number through the modent, and waiting for a person to answer. The ring and the other person talking are output on the computer's speaker, and the user talks to them through the microphone in the mouse. If desired, a speaker can be placed within the mouse 10 a well, just as a telephone handset includes both a microphone and a speaker. Alternatively, a stand-alone speaker of good quality is coupled to the computer 35 to provide high-quality audio output The same telephone line that is used to transmit digital data via the modem is now used to transmit audio telephone communication through the modem from the computer. When used as a telephone, the data is usually not recorded, though this is easily possible. Having a microphone, and optionally a speaker, within the mouse 10 permits the computer and mouse combination to perform the standard telephone function, further reducing the desk space taken up by machines.

Of course, the computer could be used as a standard dictaphone a well, transmitting the stored files digitally on computer network transmission lines to a separate location for transcribing.

As shown in Figure 4, the audio program provides the following options for a user file, edit, and help. The file menu permits a user to load any selected audio file into the audio program from a disk or save the audio tape just recorded to a disk. For example, the file menu provides a new command to create a new, empty memory location for recording; an open command to open an existing audio file; a close command to close an existing audio file without exiting the audio program; a save command to save changes made to an audio file; a save as is command to specify an audio file and save changes to that file; and an exit. The edit menu provides numerous edit commands, such as cut and paste to various files, an undo command, and an option command that allows a user to customize the audio settings as desired. The help menu provides an index, a tutorial, and other features useful in instructing a user how to operate the audio program.

The audio commentary may be imbedded or attached to numerous application programs, such as Microsoft Word or Microsoft Excel, to provide audio commentary on a written document. To imbed an audio commentary in a application program such a Microsoft Excel, the user highlights the data field on the display unit 48 to which the audio commentary will be attached, pulls-up the audio program menu, and selects the audio record mode, as has been described. When the user releases the left switch, the audio commentary is completed, and will automatically attach to that particular data field in the Microsoft Excel data file. The same technique may be used to imbed audio commentary in numerous other application programs.

It will be appreciated that, although specific embodiments of the invention have been described herein for purposes of illustration, the various modifications may be made without departing from the spirit or scope of the invention.

## Claims

1. A mouse apparatus for entering commands and audio data into a computer, comprising:
a housing;
a cursor movement control device within said housing;
a plurality of encoding means for generating electrical signals under the control of said cursor movement control device;
a first electric circuit within said housing and coupled to said encoding means for transmitting said electrical signals to said computer;
a plurality of switches coupled to said housing, said switches generating electrical switch signals;
a second electric circuit within said housing and coupled to said switches for transmitting said electrical switch signals to said computer for entering commands into said computer;
a microphone within said housing adapted to receive audio data, said microphone generating electrical audio data signals corresponding to said audio data; and
a third electric circuit within said housing and coupled to said microphone for transmitting said electrical audio data signals to said computer.

2. The apparatus of claim 1 wherein said first, second, and third electric circuits include an electrical wire cable coupled to said computer and to said housing to transmit said signals to said computer.

3. The apparatus of claim 1 wherein said first electric circuit includes a analog to digital convertor to convert said electrical signals from analog to digital form for transmission to said computer in digital form.

4. The apparatus of claim 1 wherein said third electric circuit includes a analog to digital convertor to convert said electrical audio data signals from analog to digital form for transmission to said computer in digital form.

5. The apparatus of claim 1 wherein said first, second, and third electric circuits share common electrical circuit elements.

6. The apparatus of claim 5 wherein said shared, common circuit elements include an integrated circuit, a printed circuit board, and electrical wire.

7. The apparatus of claim 5 wherein said shared, common circuit elements include an optocoupler to transmit said signals to said computer.

8. The apparatus of claim 5 wherein said shared, common circuit elements include a radio frequency communication circuit to transmit said signals to said computer.

9. The apparatus of claim 1 wherein said computer includes a serial port and said housing further includes a serial port connector for mating through a cable with said computer serial port, said electrical, audio data signals being transmitted over a wire cable through said serial port.

10. The apparatus of claim 9, further including a signal separator circuit within said computer, said signal separating circuit separating said electrical audio data signals from said electrical signals and said electrical switch signals, said signal separator being connected to said computer serial port and to a sound board within said computer, said signal separator circuit being adapted to transfer said electrical audio signals to said sound board and said electrical signals and said electrical switch signals to a different circuit than said sound board within said computer.

11. The apparatus of claim 1, further including an enabling means coupled to said housing for selectively enabling input of said electrical audio data signals into said computer.

12. The apparatus of claim 11 wherein said enabling means includes a record switch, said record switch being one of said plurality of switches coupled to said housing, and depressing said record switch causes said electrical audio data signals to be stored in said computer at a first storage location.

13. The apparatus of claim 12 wherein said first storage location is an allocated memory space within said computer.

14. The apparatus of claim 12 wherein said first storage location is a non-volatile storage device coupled to said computer.

15. The apparatus of claim 12, further including a write over means for storing a second audio signal in said first storage location by replacing said electrical audio data signals in said first storage location with said second electrical audio data signals in same said first storage location, said write-over means including said record switch.

16. The apparatus of claim 12, further including an appending means for storing a second electrical audio data signal into said computer and appending said second electrical audio data signals onto the end of first said electrical audio data signal in said first storage location, said appending means including a second switch, said second switch being one of said plurality of switches coupled to said housing.

17. The apparatus of claim 16, further including a means for enabling continuous entry of said first electrical audio data signals into said first storage location, said means for enabling including said first switch.

18. The apparatus of claim 11, further Including a means for associating said electrical audio data signals with a file previously stored in a memory of said computer, said means for associating including a file select switch that selects the file for associating said electrical audio data signals with said file, and where said file select switch and said record switch are the same switch of said plurality of switches, and the command executed by depressing said switch depends on the position of a video cursor displayed on a screen of said computer at the time the switch is depressed.

19. A data receiving and recording apparatus, comprising:
a computer, said computer having a housing, a central processing unit, a memory, a disk storage unit, a keyboard, and a display;
a sound board circuit, said sound board circuit being with said computer housing and including a circuit for receiving analog input signals corresponding to audio input data, and a circuit for processing said analog input signals into digital form through the use of an analog to digital convertor;
a computer mouse coupled to said computer;
a microphone within said computer mouse, said microphone converting audio data to electrical audio data signals; and
a transmission circuit within said computer mouse for transmitting said electrical audio data signal from said mouse to said sound board circuit.

20. The apparatus of claim 19 wherein said computer mouse comprises:
a housing;
a rotatable ball within said housing;
a plurality of encoding means in frictional contact with said ball for generating electrical signals corresponding to rotational movement of said ball;
a first electric circuit within said housing for transmitting said electrical signals to said computer;
a plurality of switches coupled to said housing said switches generating electrical switch signals;
a second electric circuit within said housing for transmitting said electrical switch signals to said computer;
said microphone within said housing adapted to receive audio data and generating electrical audio data signals corresponding to said audio data; and
a third electric circuit within said housing for transmitting said electrical audio data signals to said computer.

21. A method of recording an audio signal into a computer, comprising:
depressing a first switch of a plurality of switches to open or close a file based on the position of a cursor displayed on a computer screen when said first switch is depressed, said first switch being coupled to the housing of a computer mouse;
depressing said first switch a second time to record an audio signal, said audio signal being received by a microphone within said mouse and converted to electrical data by said microphone, said audio signal being stored in a first storage location within said computer; and
terminating said recording and storing of said first audio signal.

22. The method according to claim 21 further including the step of:
depressing said first switch to select and load an audio program to provide a record option on said computer to enable recording of an audio signal, prior to depressing said first switch to record an audio signal, said first switch being depressed a first time to load said audio program and a second time to record audio data.

23. The method of claim 22, further including:
converting said electrical audio data signal from analog form into digital form, said converting being accomplished by a sound board within said computer.

24. The method of claim 22, further including:
replacing of said stored audio signal with a second audio signal by depressing said first switch again while said computer is in the record enable mode.

25. The method of claim 24, further including:
terminating said recording of first audio signal by releasing said first switch.

26. The method of claim 21, further including:
depressing the second switch of said plurality of switches, said second switch being coupled to said mouse housing for appending a second audio signal onto said first audio signal.

27. The method of claim 26, further including the terminating said appending of second audio signal by releasing said second switch.
